# EUROPÄISCHE PATENTSCHRIFT

(11) **EP 2 937 636 B1**
(45) Veröffentlichungstag und Bekanntmachung des Hinweises auf die Patenterteilung: **07.11.2018**
(21) Anmeldenummer: 15001097.3
(22) Anmeldetag: 16.04.2015
(51) Int. Cl.: F24D 11/00

(54) **ANORDNUNG VON PUFFERSPEICHERSYSTEMEN, DESSEN VERWENDUNG SOWIE EINE VERTEILTE PUFFERSPEICHERANLAGE**
ARRANGEMENT OF BUFFER STORAGE SYSTEMS, ITS USE AND DISPERSED BUFFER STORAGE SYSTEM
ARRANGEMENT DES SYSTÈMES DE BALLON TAMPON, SON UTILISATION ET SYSTÈMES DE BALLON TAMPON DISSÉMINÉS

(30) Priorität: 23.04.2014 DE 102014105743
(43) Veröffentlichungstag der Anmeldung: 28.10.2015
(73) Patentinhaber: Enerpipe GmbH, 91161 Hilpoltstein (DE)
(72) Erfinder: Heinloth, Ludwig, 91161 Hilpoltstein (DE); Böckler, Martin, 91161 Hilpoltstein (DE)
(74) Vertreter: Schneider, Andreas

(56) Entgegenhaltungen:
- EP-A2- 0 120 493
- WO-A1-01/79761
- DE-U1-202012 103 891
- FR-A1- 2 724 160

## Beschreibung

Die Erfindung betrifft ein Pufferspeichersystem zur Verwendung in einem Nah- oder Fernwärmenetz. Außerdem betrifft die Erfindung die Verwendung eines solchen Pufferspeichersystems als Teil einer verteilten Pufferspeicheranlage in einem Nah- oder Fernwärmenetz sowie eine verteilte Pufferspeicheranlage für ein Nah- oder Fernwärmenetz mit einer Mehrzahl solcher Pufferspeichersysteme.

Um eine Nahwärmeversorgung wirtschaftlich zu betreiben, sind Pufferspeicher von zentraler Bedeutung. Die meisten Nahwärmenetze verfügen über einen zentralen Pufferspeicher in der Heizzentrale. Besonders im Sommer kann dies zu enormen Wärmeverlusten führen, da die Betriebstemperatur im gesamten Netz hoch gehalten werden muß, um im Bedarfsfall Brauchwasser für die einzelnen Abnehmer bereitstellen zu können. Während der Sommermonate gehen in den Netzen auf diesem Weg bis zu 80 Prozent der Wärme verloren.

Aus WO01/79761 A1 ist eine Zentralheizungsanlage zur Lieferung von Wärme an ein Mehrzahl von einzelnen Häusern bekannt. Die Zentralheizungsanlage umfaßt eine Wärmequelle zum zentralen Erwärmen von Wasser. Die Häuser umfassen jeweils einen Wärmespeicherbehälter mit Vorlauf- und Rücklaufleitungen, entsprechenden Ventilen sowie einer Bypass-Anordnung zur Umgehung des Wärmespeicherbehälters. Die Bypass-Funktion wird bei einer Anfrage nach Heißwasser aktiviert; eine solche Anfrage wird von dem betreffenden Haus an eine zentrale Steuereinheit der Zentralheizungsanlage gesendet.

Eine Aufgabe der vorliegenden Erfindung ist es, eine. Lösung bereitzustellen, mit deren Hilfe ein Nah- oder Fernwärmenetz besonders energieeffizient betrieben werden kann, insbesondere der tatsächliche Wärmebedarf zeitnah und sehr viel genauer als bisher möglich feststellbar ist und den Betrieb der einzelnen Pufferspeichersysteme dementsprechend aufeinander abgestimmt gesteuert und/oder geregelt werden kann.

Diese Aufgabe wird durch eine Anordnung von Pufferspeichersystemen nach Anspruch 1, durch die Verwendung dieser Anordnung nach Anspruch 4 oder durch eine verteilte Pufferspeicheranlage nach Anspruch 5 gelöst.

Vorteilhafte Ausführungen der Erfindung sind in den Unteransprüchen angegeben.

Eine Grundidee der Erfindung ist es, dezentrale Pufferspeicher vorzusehen, die eine verteilte Pufferspeicheranlage bilden, miteinander kommunizieren und dadurch den tatsächlichen Wärmebedarf zeitnah und sehr viel genauer als bisher möglich feststellen sowie den Betrieb der einzelnen Pufferspeichersysteme dementsprechend aufeinander abgestimmt steuern und/oder regeln können.

Durch die Verwendung dezentraler Pufferspeicher bei den einzelnen Abnehmern kann das Gesamtnetz im Sommerbetrieb zeitweise abgeschaltet werden. Für die Brauchwasserbereitstellung müssen die dezentralen Pufferspeicher im Sommer nur einmal täglich bzw. je nach Auslegung auch erst nach mehreren Tagen aufgeladen werden. Auf diesem Weg können die Wärmeverluste im Netz um bis zu 40 Prozent reduziert werden, dies alles bei gleichbleibender Leistung und Komfort für den Abnehmer.

Aufgrund der dezentralen Lösung ergeben sich zahlreiche Vorteile. Neben der besonders effizienten Wärmenutzung und den geringen Wärmeverlusten können im Wärmenetz auch kleinere Rohrdurchmesser verwendet werden. Die bei den einzelnen Abnehmern installierten Pufferspeichersysteme benötigen aufgrund der besonders effizienten Betriebsweise eine geringere Anschlußleistung. Im Durchschnitt ist eine bis zu 25 Prozent geringere Anschlußleistung erforderlich.

Beim Aufbau eines neuen Wärmenetzes muß ein zentraler Pufferspeicher überhaupt nicht mehr vorgesehen sein, da das gesamte Puffervolumen von der Heizzentrale in die Häuser der Abnehmer verlagert wird. Die Erfindung eignet sich aber auch für den Einsatz in bereits vorhandenen Wärmenetzen. In diesem Fall kann das Puffervolumen im zentralen Pufferspeicher verringert werden.

Alle Pufferspeicher in der verteilten Pufferspeicheranlage des Wärmenetzes werden koordiniert so geregelt bzw. gesteuert, daß die tatsächlich benötigte Wärmemenge jedem Abnehmer, also auch dem letzten Abnehmer am Ende des Versorgungsstranges, zur Verfügung steht. Darüber hinaus führt die auf der Vernetzung der einzelnen Pufferspeichersysteme beruhende Intelligenz der Pufferspeicheranlage und damit des Wärmenetzes dazu, daß in dem Wärmenetz unnötige Energiereserven nicht mehr erforderlich sind, die bei den aus dem Stand der Technik bekannten Wärmenetzen aufgrund von Nichtwissen bereitgestellt werden müssen. Tatsächlich wird mit der Erfindung sichergestellt, daß jedem Abnehmer entsprechend seinem tatsächlichen Energiebedarf diejenige Wärmemenge bereitgestellt wird, die er benötigt, ohne daß sich an seinem Verhalten oder Gewohnheiten etwas ändern muß.

Ein durchgängiges Zurverfügungstellen eines hohen Temperaturniveaus in dem gesamten Nahwärmenetz ist nicht mehr erforderlich. Statt dessen kann das Temperaturniveau im Wärmenetz niedriger gehalten werden, als üblich. Dadurch verringert sich nicht nur die Netzbelastung, sondern es ergeben sich auch geringere Wärmeverluste. Insbesondere ist es im Sommer nicht mehr erforderlich, daß das Wärmenetz dauerhaft in Betrieb ist. Statt dessen kann es zeitweise abgeschaltet werden. Es wird insgesamt weniger Energie benötigt, um alle angeschlossenen Haushalte zu versorgen.

Diese und weitere Vorteile werden nachfolgend an einem Ausführungsbeispiel der Erfindung anhand der Zeichnungen näher erläutert. Hierbei zeigen
Figur 1 eine erfindungsgemäße Pufferspeicheranlage,
Figur 2 ein erfindungsgemäßes Pufferspeichersystem.

Die Figuren zeigen die Erfindung nicht maßstabsgerecht, dabei lediglich schematisch und nur mit ihren wesentlichen Bestandteilen. Gleiche Bezugszeichen entsprechen dabei Elementen gleicher oder vergleichbarer Funktion.

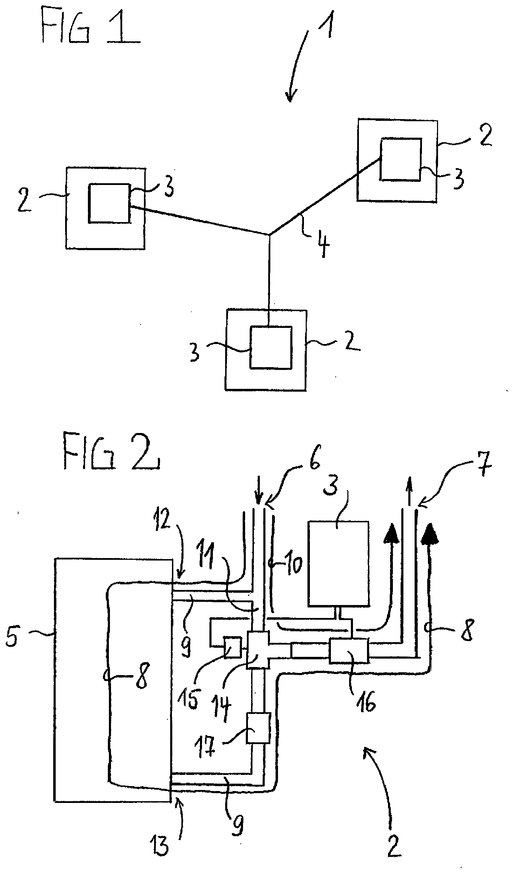

Eine verteilte Pufferspeicheranlage 1 für ein Nah- oder Fernwärmenetz zeigt Fig. 1. Die Pufferspeicheranlage 1 umfaßt mehrere, hier beispielhaft drei, entfernt voneinander angeordnete Pufferspeichersysteme 2 desselben Wärmenetzes. Bei den Pufferspeichersystemen 2 handelt es sich beispielsweise um Systeme zur Verwendung in privaten Haushalten. Die Pufferspeichersysteme 2 sind dabei an die Bedürfnisse des jeweiligen Haushalts in Größe, Funktion und Ausstattung angepaßt. Jedes Pufferspeichersystem 2 weist eine Steuereinheit 3 auf. Die Steuereinheiten 3 der Pufferspeichersysteme 2 sind miteinander zu Kommunikationszwecken vernetzt und zur aufeinander abgestimmten Steuerung und/oder Regelung der Pufferspeichersysteme 2 ausgebildet. Die Vernetzung erfolgt beispielsweise durch Verkabelung 4 oder drahtlos.

Jedes Pufferspeichersystem verfügt über wenigstens einen Pufferspeicher 5. Die Pufferspeicher 5 der Pufferspeichersysteme 2 sind jeweils über einen Vorlauf 6 und einen Rücklauf 7 mit dem Nah- oder Fernwärmenetz verbunden.

Soll der Pufferspeicher 5 aufgeladen werden, so wird ein erwärmter Wärmeträger, beispielsweise Wasser, aus dem Wärmenetz über den Vorlauf 6 in den Pufferspeicher 5 eingeleitet, wo er Wärme an das Puffermedium abgibt. Anschließend wird der Wärmeträger über den Rücklauf 7 wieder an das Wärmenetz abgegeben. Dadurch ist ein erster Strömungsweg 8 für den Wärmeträger vorgegeben. Aufbau und Funktionsweise eines solchen Pufferspeichers 5 sind ebenso bekannt und brauchen daher an dieser Stelle nicht weiter erläutert werden, wie eine geeignete Leitungsanordnung 9.

Die erfindungsgemäßen Pufferspeichersysteme 2 verfügen über eine Umschaltfunktion. Je nachdem, ob die Pufferspeicher 5 aufgeladen werden sollen oder nicht, wird der Wärmeträger durch den einzelnen Pufferspeicher 5 hindurchgeführt oder nicht. Hierzu dient ein alternativer zweiter Strömungsweg 10 für den Wärmeträger, der durch eine zusätzliche Leitungsanordnung 11 bereitgestellt wird und unter Umgehung des Pufferspeichers 5 den Vorlauf 6 direkt mit dem Rücklauf 7 verbindet.

Die Umschaltfunktion wird in dem dargestellten Ausführungsbeispiel mit Hilfe eines Umschaltelements, vorzugsweise eines 3-Wege-Umschaltventils 14, verwirklicht. Die den einzelnen Pufferspeichersystemen 2 zugeordneten Steuereinheiten 3 steuern diese Umschaltfunktion. Genauer gesagt steuern die Steuereinheiten 3 die Umschaltventile 14 entsprechend der gewünschten Funktion der Pufferspeichersysteme 2 in Abhängigkeit von der Netzsituation, insbesondere dem aktuellen Wärmebedarf, oder anderen Netzgrößen. Zu diesem Zweck sind der Stellantrieb 15 des 3-Wege-Umschaltventils 14 sowie das Regelglied 16 mit der Steuereinheit 3 des Pufferspeichersystems 2 verbunden.

Die Steuereinheit 3 ist derart ausgebildet, daß aus dem Pufferspeicher 5 keine Wärme entnommen wird, wenn diese Wärme in dem Pufferspeicher 5 benötigt, also von einem Verbraucher angefordert wird. Ist der Pufferspeicher 5 voll bzw. soll kein Aufladen des Pufferspeichers 5 erfolgen, beispielsweise weil dies die Netzsituation erfordert, in jedem Fall aber, wenn Wärme von dem Pufferspeicher 5 angefordert wird, wird das von der Steuereinheit 3 angesteuerte Umschaltventil 14 umgeschaltet und das zwischen Vorlauf 6 und Umschaltventil 14 vorhandene Zwischenstück 11 ermöglicht den alternativen Strömungsweg 10 des Wärmeträgers direkt von dem Vorlauf 6 über das Umschaltventil 14 und das geöffnete Regelglied 16 zu dem Rücklauf 7. Dadurch wird verhindert, daß Wärme aus dem Pufferspeicher 5 entnommen wird. Der Strömungsweg 10 wird vorzugsweise immer dann eingestellt, wenn die Temperatur des Wärmeträgers am Vorlauf 6 kleiner als die Temperatur des Wärmeträgers im Pufferspeicher 5 ist.

Soll hingegen ein Aufladen des Pufferspeichers 5 erfolgen, beispielsweise weil der Pufferspeicher 5 nicht vollständig aufgeladen ist, dann ist das Umschaltventil 14 von der Steuereinheit 3 derart angesteuert, daß der von dem Vorlauf 6 kommende Wärmeträger über einen Eingang 12 in den Pufferspeicher 5 eintritt. Anschließend verläßt er den Pufferspeicher 5 über den Ausgang 13 in Richtung Rücklauf 7. Der Wärmeträgerstrom passiert dabei das Umschaltventil 14 mit Stellantrieb 15 sowie ein Regelglied 16. Der Strömungsweg 8 wird vorzugsweise immer dann eingestellt, wenn die Temperatur des Wärmeträgers am Vorlauf 6 größer ist als die Temperatur des Wärmeträgers im Pufferspeicher 5. Ist der Pufferspeicher 5 aufgeladen, wird das Regelglied 16 wieder geschlossen.

Bei "zentraler Ladung", existiert also ein zentraler Pufferspeicher mit einer zentralen Förderpumpe, wird als Regelglied 16 ein Volumenstromregler verwendet und die Abnahme aus dem Pufferspeicher 5 wird über den von der Steuereinheit 3 angesteuerten Volumenstromregler volumengebunden geregelt.

Bei "dezentraler Ladung", umfaßt das Wärmenetz also keinen zentralen Pufferspeicher und keine zentrale Förderpumpe, wird als Regelglied 16 eine Pumpe eingesetzt und die Steuereinheit 3 regelt den Betrieb dieser Pumpe entsprechend den sich aus der Netzsituation ergebenden Vorgaben.

Der durch den aktuellen Wärmebedarf der einzelnen Abnehmer über die Steuereinheiten 3 kommunizierte Wärmebedarf und die Gesamtsituation des Wärmenetzes werden mit Hilfe geeigneter Algorithmen in einem zentralen Leitrechner und/oder verteilt in den einzelnen Steuereinheiten 3 zu sich daraus ergebenden Steuerbefehlen der einzelnen, einen Verbund bildenden Steuereinheiten 3 der Pufferspeichersysteme 2 verarbeitet. Hierzu kommunizieren die Steuereinheiten 3 auch die Meßergebnisse der einzelnen Wärmemengenzähler 17, die zwischen dem Ausgang 13 des Pufferspeichers 5 und dem Umschaltventil 14 angeordnet sind.

Die speziell für den Betrieb in Nah- und Fernwärmenetzen ausgelegten erfindungsgemäßen Pufferspeichersysteme 2 verfügen vorzugsweise über Hochleistungs-Wärmetauscher und können zudem mit einer Frischwasserstation ausgestattet sein. Je nach Art des Abnehmers bzw. des Haushalts können grundsätzlich ganz unterschiedliche Typen von Pufferspeichersystemen 2 verwendet werden, z. B. unterschiedlich dimensionierte Pufferspeicher, Pufferspeicher mit verschiedenen Funktionsweisen usw. Solange jedes dieser Pufferspeichersysteme 2 über die beschriebene Umschaltfunktion und die mit anderen Pufferspeichersystemen 2 kommunizierende Steuereinheit 3 verfügt, läßt sich damit die vorliegende Erfindung realisieren.

### Bezugszeichenliste

- 1: Pufferspeicheranlage
- 2: Pufferspeichersystem
- 3: Steuereinheit
- 4: Verkabelung
- 5: Pufferspeicher
- 6: Vorlauf
- 7: Rücklauf
- 8: erster Strömungsweg
- 9: Leitungsanordnung
- 10: zweiter Strömungsweg
- 11: zusätzliche Leitungsanordnung
- 12: Eingang
- 13: Ausgang
- 14: Umschaltventil
- 15: Stellantrieb
- 16: Regelglied
- 17: Wärmemengenzähler

## Patentansprüche

1. Anordnung von Pufferspeichersystemen (2),
aufweisend ein erstes Pufferspeichersystem (2), mit einem Pufferspeicher (5), der über einen Vorlauf (6) und einen Rücklauf (7) mit dem Nah- oder Fernwärmenetz verbindbar ist, mit einer Leitungsanordnung (9), die den Vorlauf (6) über den Pufferspeicher (5) mit dem Rücklauf (7) verbindet und damit einen ersten Strömungsweg (8) für einen in dem Nah- oder Fernwärmenetz zirkulierenden Wärmeträger vorgibt, mit einer zusätzlichen Leitungsanordnung (11), die den Vorlauf (6) unter Umgehung des Pufferspeichers (5) mit dem Rücklauf (7) verbindet und damit einen alternativen zweiten Strömungsweg (10) für den Wärmeträger vorgibt, mit einem Umschaltelement (14), ausgebildet zum Umschalten eines Wärmeträgerstromes zwischen dem ersten Strömungsweg (8) und dem zweiten Strömungsweg (10), und mit einer Steuereinheit (3), wobei die Steuereinheit (3) des ersten Pufferspeichersystems (2) ausgebildet ist zum Steuern des Umschaltelements (14) in Abhängigkeit von einer oder mehreren Netzgrößen,
und aufweisend wenigstens ein weiteres Pufferspeichersystem (2) mit einer weiteren Steuereinheit (3),
**dadurch gekennzeichnet, daß** die Steuereinheit (3) des ersten Pufferspeichersystems (2) ausgebildet ist zum Kommunizieren mit der weiteren Steuereinheit (3) des wenigstens einen weiteren Pufferspeichersystems (2).

2. Anordnung von Pufferspeichersystemen (2) nach Anspruch 1, bei dem die Steuereinheit (3) ausgebildet ist zum Kommunizieren mit einer weiteren Steuereinheit (3) wenigstens eines entfernt angeordneten Pufferspeichersystems (2) desselben Nah- oder Fernwärmenetzes.

3. Anordnung von Pufferspeichersystemen (2) nach Anspruch 1 oder 2, bei dem die Steuereinheit (3) ausgebildet ist zum Steuern des Umschaltelements (14) derart, daß dem Pufferspeicher (5) keine Wärme entnommen wird, wenn die Temperatur des Wärmeträgers am Vorlauf (6) kleiner als die Temperatur des Wärmeträgers im Pufferspeicher (5) ist.

4. Verwendung einer Anordnung von Pufferspeichersystemen (2) nach einem der Ansprüche 1 bis 3 als Teil einer verteilten Pufferspeicheranlage (1) in einem Nah- oder Fernwärmenetz.

5. Verteilte Pufferspeicheranlage (1) für ein Nah- oder Fernwärmenetz, mit einer Mehrzahl von Pufferspeichersystemen (2),
wobei jedes der Pufferspeichersysteme (2) aufweist:
- einen Pufferspeicher (5), der über einen Vorlauf (6) und einen Rücklauf (7) mit dem Nah- oder Fernwärmenetz verbindbar ist,
- eine Leitungsanordnung (9), die den Vorlauf (6) über den Pufferspeicher (5) mit dem Rücklauf (7) verbindet und damit einen ersten Strömungsweg (8) für einen in dem Nah- oder Fernwärmenetz zirkulierenden Wärmeträger vorgibt,
- eine zusätzliche Leitungsanordnung (11), die den Vorlauf (6) unter Umgehung des Pufferspeichers (5) mit dem Rücklauf (7) verbindet und damit einen alternativen zweiten Strömungsweg (10) für den Wärmeträger vorgibt,
- ein Umschaltelement (14), ausgebildet zum Umschalten eines Wärmeträgerstromes zwischen dem ersten Strömungsweg (8) und dem zweiten Strömungsweg (10), und
- eine Steuereinheit (3), ausgebildet zum Kommunizieren mit einer weiteren Steuereinheit (3) wenigstens eines weiteren Pufferspeichersystems (2) und weiter ausgebildet zum Steuern des Umschaltelements (14) in Abhängigkeit von einer oder mehreren Netzgrößen,
wobei diese Steuereinheiten (3) der Mehrzahl von Pufferspeichersystemen (2) miteinander zu Kommunikationszwecken vernetzt sind, und wobei diese Steuereinheiten (3) zur aufeinander abgestimmten Steuerung und/oder Regelung der Pufferspeichersysteme (2), insbesondere zur Steuerung der Umschaltelemente (14) dieser Pufferspeichersysteme (2), ausgebildet sind.

## Claims

1. Arrangement of buffer storage systems (2),
having a first buffer storage system (2), comprising a buffer store (5) which is connectable via a flow (6) and a return (7) to a local heat network or a district heating network, comprising a line arrangement (9) which connects the flow (6) to the return (7) via the buffer store (5) and therefore predefines a first flow path (8) for a heat carrier circulating in the local heat network or the district heating network, comprising an additional line arrangement (11), which connects the flow (6) to the return (7) while bypassing the buffer store (5) and therefore predefines an alternative, second flow path (10) for the heat carrier, having a changeover element (14) designed to switch a heat carrier flow between the first flow path (8) and the second flow path (10), and comprising a control unit (3), the control unit (3) of the first buffer storage system (2) being designed to control the changeover element (14) as a function of one or more network variables,
and having at least one further buffer storage system (2) comprising a further control unit (3), **characterized in that** the control unit (3) of the first buffer storage system (2) is designed for communicating with the further control unit (3) of the at least one further buffer storage system (2) .

2. Arrangement of buffer storage systems (2) according to Claim 1, in which the control unit (3) is designed for communicating with a further control unit (3) of at least one remotely arranged buffer storage system (2) of the same local heat network or district heating network.

3. Arrangement of buffer storage systems (2) according to Claim 1 or 2, in which the control unit (3) is designed to control the changeover element (14) in such a way that no heat is taken from the buffer store (5) when the temperature of the heat carrier on the flow (6) is lower than the temperature of the heat carrier in the buffer store (5).

4. Use of an arrangement of buffer storage systems (2) according to one of Claims 1 to 3 as part of a distributed buffer storage installation (1) in a local heat network or district heating network.

5. Distributed buffer storage installation (1) for a local heat network or a district heating network, comprising a plurality of buffer storage systems (2),
wherein each of the buffer storage systems (2) has:
- a buffer store (5), which is connectable to the local heat network or the district heating network via a flow (6) and a return (7),
- a line arrangement (9) which connects the flow (6) to the return (7) via the buffer store (5) and therefore predefines a first flow path (8) for a heat carrier circulating in the local heat network or the district heating network,
- an additional line arrangement (11), which connects the flow (6) to the return (7) while bypassing the buffer store (5), and therefore predefines an alternative, second flow path (10) for the heat carrier,
- a changeover element (14) designed to switch a heat carrier flow between the first flow path (8) and the second flow path (10), and
- a control unit (3), designed for communicating with a further control unit (3) of at least one further buffer storage system (2), and further designed to control the changeover element (14) as a function of one or more network variables, wherein these control units (3) of the plurality of buffer storage systems (2) are linked with one another for communication purposes, and wherein these control units (3) are designed for the mutually coordinated control and/or regulation of the buffer storage systems (2), in particular for the control of the changeover elements (14) of these buffer storage systems (2).

## Revendications

1. Agencement de systèmes (2) de réservoir tampon présentant
un premier système (2) de réservoir tampon présentant un réservoir tampon (5) qui peut être relié au réseau de chauffage de proximité ou à distance par un départ (6) et un retour (7), un ensemble (9) de conduits qui relie le départ (6) au retour (7) par l'intermédiaire du réservoir tampon (5) et définit ainsi un premier parcours d'écoulement (8) pour un fluide caloporteur qui circule dans le réseau de chauffage de proximité ou à distance, un ensemble supplémentaire (11) de conduits qui relie le départ (6) au retour (7) en contournant le réservoir tampon (5) et définit ainsi un deuxième parcours d'écoulement (10) alternatif pour le fluide caloporteur, un élément de commutation (14) configuré pour commuter l'écoulement de fluide caloporteur entre le premier parcours d'écoulement (8) et le deuxième parcours d'écoulement (10) et une unité de commande (3), l'unité de commande (3) du premier système (2) de réservoir tampon étant configurée pour commander l'élément de commutation (14) en fonction d'une ou plusieurs grandeurs du réseau,
et présentant au moins un autre système (2) de réservoir tampon doté d'une autre unité de commande (3),
**caractérisé en ce que**
l'unité de commande (3) du premier système (2) de réservoir tampon est configurée pour communiquer avec l'autre unité de commande (3) d'un autre ou des autres systèmes (2) de réservoir tampon.

2. Agencement de systèmes (2) de réservoir tampon selon la revendication 1, dans lequel l'unité de commande (3) est configurée pour communiquer avec une autre unité de commande (3) d'au moins un système (2) de réservoir tampon situé à distance et faisant partie du même réseau de chauffage de proximité ou à distance.

3. Agencement de systèmes (2) de réservoir tampon selon les revendications 1 ou 2, dans lequel l'unité de commande (3) est configurée pour commander l'élément de commutation (14) de telle sorte qu'aucune chaleur ne soit prélevée dans le réservoir tampon (5) lorsque la température du fluide caloporteur sur le départ (6) est inférieure à la température du fluide caloporteur dans le réservoir tampon (5).

4. Utilisation d'un ensemble de systèmes (2) de réservoir tampon selon l'une des revendications 1 à 3 comme partie d'une installation (1) de réservoirs tampons d'un réseau de chauffage de proximité ou à distance.

5. Installation répartie (1) de réservoirs tampons pour réseau de chauffage de proximité ou à distance, présentant plusieurs systèmes (2) de réservoir tampon, chacun des systèmes (2) de réservoir tampon présentant :
un réservoir tampon (5) qui peut être relié au réseau de chauffage de proximité ou à distance par un départ (6) et un retour (7),
un ensemble (9) de conduits qui relie le départ (6) au retour (7) par l'intermédiaire du réservoir tampon (5) et définit ainsi un premier parcours d'écoulement (8) pour un fluide caloporteur qui circule dans le réseau de chauffage de proximité ou à distance,
un ensemble supplémentaire (11) de conduits qui relie le départ (6) au retour (7) en contournant le réservoir tampon (5) et définit ainsi un deuxième parcours d'écoulement (10) alternatif pour le fluide caloporteur,
un élément de commutation (14) configuré pour commuter l'écoulement de fluide caloporteur entre le premier parcours d'écoulement (8) et le deuxième parcours d'écoulement (10) et
une unité de commande (3) configurée pour communiquer avec une autre unité de commande (3) d'au moins un autre système (2) de réservoir tampon et pour commander l'élément de commutation (14) en fonction d'une ou plusieurs grandeurs du réseau,
ces unités de commande (3) des différents systèmes (2) de réservoir tampon étant raccordées en réseau dans un but de communication, ces unités de commande (3) étant configurées pour assurer une commande et/ou une régulation des systèmes (2) de réservoir tampon et en particulier pour la commande des éléments de commutation (14) de ces systèmes (2) de réservoir tampon.
